(19) Europäisches Patentamt
European Patent Office
Office européen des brevets

(11) EP 1 483 966 A1

(12) **EUROPEAN PATENT APPLICATION**
published in accordance with Art. 158(3) EPC

(43) Date of publication:
**08.12.2004 Bulletin 2004/50**

(21) Application number: **03737505.2**

(22) Date of filing: **07.02.2003**

(51) Int Cl.[7]: **A01N 25/18**, A01N 35/00

(86) International application number:
**PCT/JP2003/001303**

(87) International publication number:
**WO 2003/065805 (14.08.2003 Gazette 2003/33)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **07.02.2002 JP 2002031409**
**12.02.2002 JP 2002034625**

(71) Applicant: **Kuraray Co., Ltd.**
**Okayama 710-8622 (JP)**

(72) Inventors:
- **HINO, Kenichi**
**c/o Kuraray Family Product Co.,Ltd.**
**Osaka-shi, Osaka 530-8611 (JP)**
- **SHIMAMURA, Michiya c/o KURARAY CO., LTD.**
**Kurashiki-shi, Okayama 710-0801 (JP)**

(74) Representative:
**von Kreisler, Alek, Dipl.-Chem. et al**
**Deichmannhaus am Dom,**
**Postfach 10 22 41**
**50462 Köln (DE)**

(54) **METHOD OF CONTROLLING ACARIAN AND DEVICE FOR USE IN THE SAME**

(57) A method for controlling Acarina, which includes allowing a gaseous compound having the formula (I)

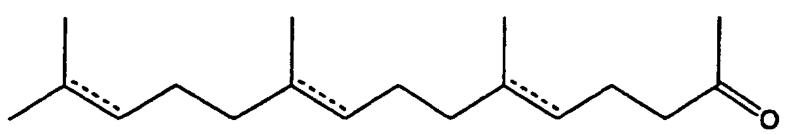

(I)

wherein -------- is a single bond or a double bond, to be present at a concentration of 0.001-20,000 μg/L in a space where Acarina repellence is intended, and an apparatus capable of effectively controlling Acarina are provided.

EP 1 483 966 A1

## Description

### Technical Field

The present invention relates to a method of controlling Acarina, which comprises filling a space where the presence of Acarina is not intended with a vapor of a compound having the following formula (I):

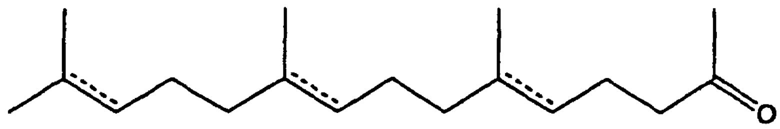

(I)

wherein -------- is a single bond or a double bond, at a particular concentration for a long time, thereby creating an environment Acarina do not like, which presses the Acarina to leave the space and simultaneously prevents new invasion, and an apparatus to be used therefor.

### Background Art

Acarina are well known not only to give damages to agricultural products, and uncomfortable feeling and blood-sucking damage to human, but also to mediate severe diseases such as cerebritis due to Acarina, relapsing fever, trombiculiasis and the like, and diseases in livestock. In recent years, along with the domestic prevelance of the idea of sanitation and increasing environmental cleanliness, the morbidity of infectious diseases mediated by Acarina is decreasing. On the other hand, increase in the allergic diseases caused thereby as allergen has been observed, and one of the main causes of allergic diseases such as atopic dermatitis, bronchial asthma, rhinitis and the like is considered to be indoor Acarina. The increased number of indoor Acarina is largely attributable to the improved living environment, and increasing environments preferable for Acarina, as evidenced by prevalence of highly airtight houses, improved performance of indoor heating system during winter, increased use of fiber products for westernization of interior design and the like, is considered to have enlarged the damage. Thus, countermeasures for them are strongly desired.

As a countermeasure, acaricidal agents, such as organophosphates, carbamates and the like, have been conventionally used widely. However, since these agents mostly contain a highly toxic chemical as an active ingredient, they are associated with the problem of damage to human and livestock. While a number of low toxic pyrethroid agents have appeared in recent years, as long as their effectiveness expression mechanism is based on the biocidal activity, concerns about the health of human and livestock as well as influence on the environment cannot be eliminated.

On the other hand, Acarina control agents based not on acaricidal activity but on repellent effect are known. Repellents free of biocidal activity are expected to simultaneously provide high safety and pest controllability. The present inventors have found that a compound having the following structure

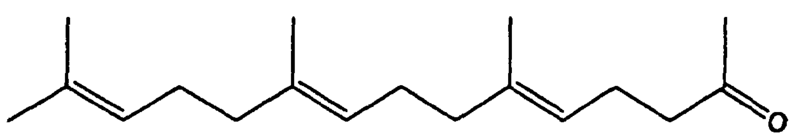

farnesylacetone

has Acarina repellency and proposed an Acarina control agent containing this compound (see JP-A-10-316507.). This Acarina control agent has more advantages as compared to conventionally known organophosphate-, pyrethroid- and carbamate-type and other types of acaricides in that (1) it has lower acaricidal activity, and Acarina can be removed without leaving Acarina cadaver, which is a potent allergen, in the environment, (2) Acarina do not acquire resistance easily, (3) it is highly safe to human and livestock, and the like.

The above-mentioned publication discloses that farnesylacetone can be used for controlling Acarina. However, it does not disclose that the Acarina control agent can be used for efficient and effective control of Acarina by maintaining farnesylacetone in an effective concentration range in a space where the presence of Acarina is not desired.

**Disclosure of the Invention**

The present inventors have conducted intensive studies and found that Acarina can be particularly effectively controlled by allowing a gaseous compound having the formula (I)

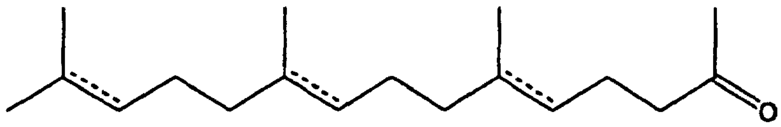

(I)

wherein -------- is a single bond or a double bond, (hereinafter to be also referred to as compound (I)) to be present at a particular concentration of 0.001-20,000 μg/L in a space where Acarina repellence is intended, and further that a compound having the formula (I')

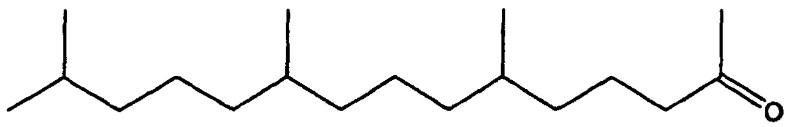

(I')

(phytone; hereinafter to be also referred to as compound (I')) has a superior Acarina control effect, which resulted in the completion of the present invention.

Accordingly, the present invention provides a method of effectively controlling Acarina, which comprises maintaining the concentration of compound (I) within a repellence effective concentration range for a long time in a space where Acarina repellence is intended, a method and an apparatus for efficiently achieving such effective concentration, and an Acarina control agent containing compound (I') as an active ingredient. Thus, the present invention provides the following.

[1] A method of controlling Acarina, which comprises maintaining a gaseous compound having the formula (I)

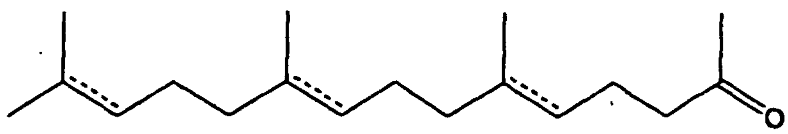

(I)

wherein -------- is a single bond or a double bond, at a concentration of 0.001-20,000 μg/L in a space where Acarina repellence is intended.

[2] The method of the above-mentioned [1], wherein the aforementioned concentration is achieved by vaporizing a compound having the formula (I) by a vaporization enhancing means.

[3] The method of the above-mentioned [1] or [2], wherein the aforementioned concentration is achieved by vaporizing a compound having the formula (I) by a vaporization area expanding means.

[4] The method of the above-mentioned [2] or [3], wherein the vaporization enhancing means is a heating means.

[5] The method of the above-mentioned [2] or [3], wherein the vaporization enhancing means is an air blowing means.

[6] An apparatus for controlling Acarina, which comprises a reservoir means for an agent containing a compound having the formula (I), and a means for enhancing vaporization of the compound having the formula (I).

[7] The apparatus of the above-mentioned [6], further comprising a vaporization area expanding means for the compound having the formula (I).

[8] The apparatus of the above-mentioned [6] or [7], wherein the vaporization enhancing means is a heating means.

[9] The apparatus of the above-mentioned [6] or [7], wherein the vaporization enhancing means is an air blowing means.

[10] An Acarina control agent comprising phytone as an active ingredient.

**Brief Disclosure of the Drawings**

Fig. 1 explains an Acarina repellence test by an improved glass tube method.
Fig. 2 explains an Acarina repellence test by an improved invasion prevention method.

**Detailed Description of the Invention**

The compound (I) is a known compound and is chemically synthesized at a large scale as a starting material for synthesizing, for example, a side chain of vitamin E and vitamin $K_2$. The compound (I') is compound (I) wherein -------- is not a double bond. Therefore, the agent containing compound (I) to be used for the method of the present invention can be used as an Acarina control agent containing compound (I') as an active ingredient (hereinafter to be simply referred to as the agent of the present invention). Therefore, a simple reference to compound (I) in the present specification also refers to compound (I'), unless particularly deviated from the context. When -------- is a double bond, compound (I) includes plural kinds of geometrical isomers based on different bonding sites to the double bond (*cis, trans*). The compound (I) to be used for the present invention may be any of these geometrical isomers, or a mixture of two or more kinds of these geometrical isomers, where the mixing ratio is not particularly limited.
The "gaseous" of the gaseous compound (I) of the present invention includes a mist state depending on the vaporization conditions, surrounding environmental conditions, and the like.
The concentration of gaseous compound (I) in a space where Acarina repellence is intended is at least not less than 0.001 μg/L, preferably not less than 0.01 μg/L and not more than 20,000 μg/L at most, preferably not more than 2,000 μg/L. When the concentration is less than 0.001 μg/L, an Acarina controlling effect is not found and when it exceeds 20,000 μg/L, the odor compound (I) generates becomes unpleasantly strong and is not practical.
The space where Acarina repellence is intended is free of any particular limitation as regards size, shape and the like, because the amount of use and method of use of compound (I) can be adjusted so that the above-mentioned concentration can be achieved.
The agent comprising compound (I) in the context of the present specification refers to a single compound of compound (I) and a dilute solution obtained by diluting compound (I) with a diluent, or one containing other carriers, including not only a liquid but a solid. As the diluent, any inorganic or organic diluent can be used as long as it does not exert an adverse influence on compound (I). As the diluent, a solvent, an aroma retention agent, a moisturizer and the like can be used. Of these, those having high safety, which are used as starting materials for cosmetics, are desirable, and, for example, alcohols such as ethyl alcohol, isopropyl alcohol and the like, ketones such as acetone and the like, esters (low boiling point) such as ethyl acetate and the like; silicone oil, polyethylene glycol, polypropylene glycol, jojoba oil, squalane, liquid paraffin, rape seed oil, cotton seed oil, tung oil, camellia oil, other vegetable oil (high boiling point oil) and the like can be mentioned. It is also possible to add an additive such as emulsifier and the like to a diluent for compound (I) and use the mixture as a water dispersible agent. As the additive, for example, alkylbenzenesulfonates, α-olefinesulfonates, alkanesulfonates, tetraammonium salts having long-chain alkyl groups, aliphatic mono- or di-ethanolamide, (poly)ethylene glycol ester or ether of fatty acid, glycerin ester of mono-fatty acid, sorbitan esters of fatty acid, polyoxyethylene sorbitan fatty acid ester, alkylphenyl polyoxyethylene ether, N-alkyl betaine-type or sulfobetain-type surfactants and the like can be mentioned. Of these, those having high safety, which are used as starting materials for cosmetics, such as sodium octylsulfosuccinate, polyoxyethylensorbitan monolaurate and the like are preferable. In addition, the agent comprising compound (I) can further contain auxiliary agent, stabilizer, thickener, coloring agent, flavor and the like, as necessary.
As a method of vaporizing a sufficient amount of a liquid agent comprising compound (I) to achieve the concentration of gaseous compound (I) in the aforementioned space where Acarina repellence is intended, any method capable of achieving the object can be used without a particular limitation. Such method and an apparatus to achieve the method are concretely and exemplarily shown in the following.
A method comprising placing an agent comprising compound (I) in a container having a porous wall, such as unglazed pottery, sintered metal and the like, and allowing compound (I) to vaporize from the about entire outer surface upon oozing of the agent comprising compound (I) out on the outer surface of the container. The container having a porous wall in this method corresponds to the reservoir means for an agent comprising compound (I) in the apparatus of the present invention, and is also a vaporization area expanding means. The reservoir means for an agent comprising compound (I) is not limited to the above-mentioned container and is not particularly limited as long as it can reserve an agent comprising compound (I) until vaporization. For example, the means may be a reservoir means embodied by preserving an agent comprising compound (I) in a container such as a glass or plastic bottle and the like, distributing the agent in the container closed tightly and cutting open a part of the container when in use, or opening the lid and transferring the contents into vaporization area expanding means or a container, and a vaporization area expanding

means to be explained in the following also can be a reservoir means depending on the embodiment thereof.

As a different method, a method comprising immersing one end of a cloth, string or sponge like vaporization area expanding means having a wide surface area in a reservoir means for an agent comprising compound (I), thereby allowing the vaporization area expanding means to absorb the agent comprising compound (I) by a capillary phenomenon, or continuously supplying an agent comprising compound (I) from the reservoir means for the agent comprising compound (I) to the vaporization area expanding means, thereby allowing the agent to be absorbed, and vaporizing compound (I) from the surface of the vaporization area expanding means can be mentioned. Examples of the vaporization area expanding means used for this method include natural fibers such as pulp, cotton, hemp and the like; synthetic fibers such as polyester and the like; paper, fabric, knitted product, felt and non-woven fabric produced from glassfiber and the like; a sponge formed article which is a porous structure made from a synthetic resin or glass; and further, a strand, knitted product, fabric of hollow fiber produced from synthetic resin or glass, and the like can be mentioned. These are not particularly limited as long as they can expand the vaporization area of compound (I). While it is difficult to give a specific figure of the wide surface area necessary for its vaporization, because it can vary depending on the conditions such as materials of the vaporization area expanding means and the like, the wider the surface area is, it is more possible to promote efficient vaporization. It is extremely difficult to measure the surface area of porous substances and the surface area of fiber products, but a surface area of at least 50 $cm^2$, preferably not less than 100 $cm^2$, is practical. In the case of a wide surface area, the concentration of compound (I) in a space where Acarina repellence is intended can be adjusted to fall within the above-mentioned range by reducing the concentration of compound (I) contained in the agent, and in the case of a small surface area, the concentration of compound (I) in the space can be adjusted to fall within the above-mentioned range by increasing the concentration of compound (I) contained in the agent.

As a different method for achieving the object mentioned in the foregoing paragraph, a method comprising coating or spraying an agent comprising compound (I) on a vaporization area expanding means having a wide surface area can be mentioned. In this case, a vaporization area expanding means corresponds to a reservoir means for an agent comprising compound (I). As examples of such coating or spray means, a brush, a spray, direct spraying from a bottle container, dropwise addition using a dropper, spraying using a sprinkling pot and the like can be mentioned.

Coating and spraying on a vaporization area expanding means may be performed once or plural times, and coating and spraying may be appropriately combined. For plural times of coating or spraying, the interval between respective coatings and sprayings is calculated based on actual measurement of disappearance time of compound (I) or theoretical assumption thereof, and before the interval period expires or when it has expired, the coating or spraying is preferably applied. It is recommended that a use manual should be attached, which describes such manner.

As mentioned above, vaporization of compound (I) can be also accelerated by increasing the surface area of a vaporization area expanding means. Since compound (I) has a high boiling point, it is more preferable to use a vaporization enhancing means to forcibly vaporize compound (I). Thus, in another embodiment of the present invention, the aforementioned concentration is preferably achieved by forcibly vaporizing compound (I) using a vaporization enhancing means via or not via a vaporization area expanding means, which means is explained now.

Since the vaporization enhancing means is not particularly limited as long as it can forcibly vaporize compound (I), any means can be used. It may intend to vaporize compound (I) alone or it may vaporize compound (I) when vaporizing other substances contained along with compound (I) in an agent comprising compound (I).

As such means, a heating means and an air blowing means can be mentioned. For example, when a heating means is used as an enhancing means to vaporize compound (I), as one embodiment to achieve the object of the present invention, one using an apparatus equipped with a heating means (preferably further equipped with a temperature control means), which heats an agent comprising compound (I) included in the inside of the apparatus to a suitable temperature by a heating means and a temperature control means, and vaporizes compound (I) from the inner and outer surfaces and/or outer surface of the apparatus can be mentioned. In another embodiment, an apparatus is used, wherein this apparatus is combined with the aforementioned vaporization area expanding means having a wide surface area, one end of the vaporization area expanding means is immersed in a reservoir containing an agent comprising compound (I) to allow absorption by a capillary phenomenon, or the agent comprising compound (I) is continuously supplied to a vaporization area expanding means to allow absorption, and a reservoir means or a vaporization area expanding means for the agent comprising compound (I) are heated to an appropriate temperature by a heating means and a temperature control means to forcibly evaporate compound (I). As the above-mentioned heating means, heat generation by heating wires such as nichrome wire and the like, low energy light sources such as a pilot lamp, and the like can be mentioned. As the above-mentioned temperature control means, a bimetal is most convenient, but one controlling an electric power to be supplied to a heating wire by inputting a temperature detected by a thermo couple, a thermistor and the like into a CPU may be used.

When an air blowing means is used as a vaporization enhancing means, use of an apparatus that forcibly vaporizes compound (I) by blowing an air by an air blowing means against a vaporization area expanding means that has absorbed an agent comprising compound (I) can be mentioned. As such air blowing means, fans such as a propeller

fan, a sirocco fan and the like, a pump having a film and a valve (e.g., a pump used for bubbling an air into a water tank when raising goldfish) and the like can be mentioned. As a different embodiment, an apparatus wherein a heating means is incorporated in pair with an air blowing means, an agent comprising compound (I) is heated to an appropriate temperature by sending a warm air to a vaporization area expanding means to forcibly vaporize compound (I) can be mentioned.

As the heating temperature of the heating means, since a flash point of compound (I) is as low as about 110°C and as high as about 160°C, a temperature of not less than 10°C lower than the flash point is preferable. This temperature needs to be appropriately adjusted in accordance with the properties of the diluent and the like to be used alongside. For example, it is 50-110°C, preferably 60-100°C. In addition, the wind speed of the air blowing means is preferably 0.001-5 m/sec, and the air quantity is preferably 0.001-10 L/sec.

It is possible to have gaseous compound (I) present at a concentration of 0.001-20,000 μg/L in a space where Acarina repellence is intended, by regularly coating or spraying an agent comprising compound (I) on items placed in a house. As such items, for example, carpet, tatami mat, bedding, stuffed toy, floral tube, vase, decorative figurine, artificial flower, and other items generally set in a house can be mentioned. In one embodiment of the present invention, a method comprising adding an agent comprising compound (I) to a flooring wax or other polishing agents, impregnating a disposable mop, a reusable mop and the like therewith and coating a windowsill, a doorsill, a screen window and the like can be mentioned, and according to such method, invasion of Acarina can be prevented and Acarina can be forced out by evaporating compound (I) from a wide surface area and filling the vapor of compound (I) in the room or near the coated surface. An item to which an agent comprising compound (I) has been applied corresponds to a reservoir means for the agent comprising compound (I) and a vaporization area expanding means.

An agent comprising compound (I) can take any dosage form such as tablet, pellet, capsule, cream, ointment, aerosol, powder, liquid, emulsion, suspension and the like. While the agent of the present invention can be used alone, it may be used concurrently with other Acarina control agents. In addition, other components effective for Acarina control may be added to give a single preparation.

To facilitate use of the agent of the present invention, it is preferable to add, besides compound (I), a solvent, a carrier, an emulsifier, a stabilizer and the like to give a preparation and use the preparation by processing as necessary into a dilute solution and the like. Where necessary, other components, such as an antioxidant, a sustaining substance, a paint, a carrier, a flavor, a coloring agent and the like may be added or combined. It is preferable to make a flavor or a coloring agent function as an indicator informing the timing of replacing the item for controlling Acarina using the agent of the present invention. For example, a flavor having a lower boiling point than that of compound (I), which loses fragrance the item for controlling Acarina had when use was started, before disappearance of compound (I) or which clearly indicates the change of fragrance, is preferably added.

Of compounds (I), those having a double bond are gradually oxidized in the air. To prevent this, an antioxidant is preferably added or concurrently used. As the antioxidant, for example, phenol type antioxidants such as vitamin E, butylhydroxytoluene, Irganox 1010, Irganox 1076 and the like; polyphenol type antioxidants such as tannic acid, gellic acid and the like are used. The amount of use thereof is preferably in the range of 0.001-10 wt%, more preferably in the range of 0.1-5 wt%, relative to compound (I).

As an Acarina controlling ingredient that can be added besides compound (I), for example, compounds having a repellent effect against Acarina such as diethyltoluamide, 2,3,4,5-bis(Δ2-butylene)-tatrahydrofurfural, di-n-propylisocinchomeronate di-n-butylsuccinate, 2-hydroxyethyloctylsulfide, 2-t-butyl-4-hydroxyanisole, 3-t-butyl-4-hydroxyanisole, 1-ethynyl-2-methyl-pentenyl 2,2,3,3-tetramethylcyclopropanecarboxylate, N-hexyl-3,4-dichloromaleimide and the like can be mentioned. An Acarina control agent containing these components can be used concurrently with the agent of the present invention.

As the above-mentioned solvent, any solvent can be used as long as it does not exert an adverse influence on compound (I). As such solvent, for example, alcohols such as ethyl alcohol, isopropyl alcohol and the like; silicone oil, polyethylene glycol, polypropylene glycol, jojoba oil, squalane, liquid paraffin; rape seed oil, cotton seed oil, tung oil, camellia oil, other vegetable oils and the like can be mentioned. The amount of use thereof is preferably in the range of 10-99 wt%, more preferably in the range of 50-95 wt%, of the entire preparation.

As the above-mentioned carrier, any carrier can be used as long as it does not exert an adverse influence on compound (I). As such carrier, for example, silica, active charcoal, porous zirconium phosphate, porous alumina, diatomaceous earth, perlite, vermiculite, zeolite, galleon earth, wood powder, wood chip and the like can be mentioned.

As the above-mentioned emulsifier, any emulsifier can be used as long as it does not exert an adverse influence on compound (I). As such emulsifier, for example, alkylbenzenesulfonates, α-olefinesulfonates, alkanesulfonates, tetraammonium salts having long-chain alkyl groups, aliphatic mono- or di-ethanolamide, (poly)ethylene glycol ester or ether of fatty acid, glycerin ester of mono-fatty acid, sorbitan esters of fatty acid, polyoxyethylene sorbitan fatty acid ester, alkylphenyl polyoxyethylene ether and the like can be mentioned. The amount of use thereof is preferably in the range of 5-90 wt%, more preferably in the range of 10-50 wt%, of the entire preparation.

As the above-mentioned stabilizer, any stabilizer can be used as long as it does not exert an adverse influence

on compound (I). As such stabilizer, for example, polyvinyl alcohol, gelatin, carboxymethylcellulose, polyvinylpyrrolidone, polyethylene glycol, macrogol, acacia, starch and the like can be mentioned.

As the above-mentioned sustaining substance, any sustaining substance can be used as long as it does not exert an adverse influence on compound (I), and includes thermoplastic resins, waxes, gels, various microcapsules and the like.

The agent comprising compound (I) may be a solid. As a sustaining substance to be added to give a solid, for example, thermoplastic resins, waxes, gels, microcapsules, porous inorganic particles and the like can be mentioned.

The agent comprising compound (I) to be used for the method of the present invention may be a formed solid. The formed solid may take any form of granule, pellet, rod, sheet, bulk, flake, sponge and the like, and may be used as a closet dusting powder, an under floor dusting powder and the like, or as an interior decoration, such as a decorative figurine for an alcove ornament, a vase, a calendar, a tapestry, a candle and the like. In addition, a formed product can be used in a container that permits easy vaporization of compound (I) at important points in the house. By taking the form of a formed product, compound (I) can be vaporized for a longer period as compared to the use as the aforementioned liquid.

With regard to the thermoplastic resin, use of a resin having a markedly high molding temperature results in vaporization of compound (I) and the like and marked generation of white smoke upon kneading compound (I) or a dilute solution thereof during molding. Therefore, a thermoplastic resin having a molding temperature of less than 200°C, preferably not more than 160°C, more preferably not more than 140°C, is preferably used. In contrast, use of a resin having a markedly low molding temperature results in a limited use due to high stickiness of the resin. Thus, a resin having a molding temperature of not less than 50°C is preferably used. As the preferable thermoplastic resin, for example, low melting point resins such as a soft acrylic resin comprising (meth)acrylic ester-copolymer, a soft acrylic resin prepared to have a core-shell structure consisting of a rubber part and a hard resin part, an ethylene-vinyl acetate copolymeric resin, a poly(trans-isoprene) resin, a thermoplastic elastomer prepared by block polymerization of styrene-butadiene or isoprene and the like, poly-ε-caprolactone, poly-D,L-decalactone, polydioxinone, urethane resins and the like can be mentioned. The amount of compound (I) to be added to a thermoplastic resin is preferably determined for prolonging the effective period by experimentally setting an upper limit amount free of bleeding of compound (I) from the resin and choosing the highest possible amount within the limits. For example, when a soft acrylic resin is used as a thermoplastic resin, the amount of compound (I) to be added is preferably in the range of 10-50 wt%.

As the waxes, for example, higher alcohol, candelilla wax, rice wax, carbawax, Japan wax, yellow beeswax, microcrystalline wax, polyethylene wax, stearic acid, paraffin wax, vaseline, whale oil, beef tallow and the like can be mentioned. The amount of compound (I) to be added to these waxes is preferably determined for prolonging the effective period by experimentally setting an upper limit amount free of bleeding of compound (I) from the wax and choosing the highest possible amount within the limits. For example, when stearic acid is used as a wax, the amount of compound (I) to be added is preferably in the range of 10-60 wt%.

As the gels, one that can become an oil gel is preferable for containing a large amount of compound (I). For example, a gelling component such as sodium stearate, aluminum stearate, aluminum 2-ethylhexanoate, dibenzylidene sorbitol and the like is added to compound (I), and a small amount of alcohol or water is used to prepare a gel product. The amount of compound (I) to be added to such gel is preferably 10-60 wt%.

As the above-mentioned paint, any paint can be used as long as it does not exert an adverse influence on compound (I). As such paint, for example, varnish; enamel; acetylcellulose lacquer; ethylcellulose lacquer; alkyd resin enamels and varnishes; vinyl resin enamels and varnishes such as vinyl chlorides, vinyl acetate-methacrylates, styrene-butadienes and the like; pigment oil paste paint, and the like can be mentioned. When compound (I) is added to these paints, an amount is preferably determined for prolonging the effective period by experimentally setting an upper limit amount free of stickiness of paint after drying and choosing the highest possible amount within the limits. When it is added to, for example, varnish, the amount of compound (I) to be added to the paint is preferably in the range of 1-10%.

As the above-mentioned flavor, any of natural flavors and synthetic flavors can be used as long as it does not exert an adverse influence on compound (I) and does not prevent the Acarina repellent effect of compound (I). When the agent of the present invention is used in the living space, use of highly safe flavor is particularly preferable. As the natural flavor, for example, bergamot oil, mentha oil, lemongrass oil, eucalyptus oil, Japanese cypress oil, citronella oil and the like can be mentioned, and as the synthetic flavor, for example, terpenoid flavors such as linalool, lynalyl acetate, geraniol, nerolidol, citral and the like can be mentioned.

The porous inorganic particles mean porous particles made from hardly soluble or insoluble inorganic powder, having an average particle size of from 1 μm to 10 mm, more preferably from 2 μm to 5 mm, and having a BET surface area of not less than 50 $m^2/g$, more preferably not less than 100 $m^2/g$.

The porous inorganic particles comprise silica; metal oxides such as alumina, zinc oxides, magnesium oxides, titanium oxides, zirconium oxides and the like; metal hydroxides such as aluminum hydroxides, magnesium hydroxides

and the like; metal silicates such as calcium silicates, magnesium silicates, aluminum silicates and the like; metal carbonates such as calcium carbonate, magnesium carbonate and the like; metal sulfates such as calcium sulfate, magnesium sulfate and the like; clay minerals such as montmorillonite, talc, pyrophyllite, zeolite and the like; and the like.

The porous inorganic particles may be synthesized by a sol-gel method using metal alkoxide and the like, an ion exchange method using a soluble salt of a metal and the like, or naturally occurring ones may be used as they are or after purification. When the synthesized or naturally occurring inorganic material itself is an already substantial porous solid, this porous solid may be appropriately adjusted to an easy-to-use size by a means such as pulverization, sieving and the like and used as a carrier to absorb compound (I). When such method is not directly available, the synthesized or naturally occurring inorganic material may be suspended in a solvent such as water and the like and granulated by a spray-dry method, or granulated to a desired particle size in a granulator that rotates a slurry or a powder while drying, and the like, adjusted in size, and where necessary, and sintered and the like to secure stability of the particles, which are then used as a carrier. As a modified method, a clay mineral having enlarged layer-to-layer spacing by a treatment with tetraammonium salts may be used as a carrier; a binder made from an organic polymer substance that improves binding of inorganic powders and compound (I) may be granulated simultaneously to introduce compound (I) at once into the inorganic carrier; and an organic polymer substance containing compound (I) as a binder may be mixed with these inorganic powders and the powder mixture can be granulated together.

The agent of the present invention can be prepared into any dosage form, such as an aerosol, an oil agent, a fumigant, a sheet, a powder, a microcapsule, a water dispersible agent and the like by a known method. The agent of the present invention in these dosage forms is applied to various materials such as woven cloth, knitted cloth, wet type non-woven fabric (paper), dry type non-woven fabric, plywood, synthetic resin sheet, synthetic resin plate, wood and the like by the operations of spraying, coating, impregnation, spreading and the like.

When compound (I), which is the active ingredient in the agent of the present invention, is added to various resins and processed into molded objects such as fiber, film, sheet, plate and the like, and these molded objects are used as starting materials for production of commodities for living in a house where Acarina inhabit, such as various building materials, tatami mat, bedding, carpet, batting and the like, and the molded objects are used as members for controlling Acarina, the aforementioned molded objects, commodities for living and various members that express an Acarina controlling effect are also encompassed in the present invention.

When a preparation is formed, the content of compound (I) in the agent of the present invention is preferably in the range of 0.1-99 wt%, more preferably in the range of 5-99 wt%. The amount of the agent of the present invention to be used is not particularly limited as long as an Acarina controlling effect is expressed, but it is, for example, preferably in the range of about 0.01-10 g, more preferably in the range of about 0.1-3 g, based on compound (I), per unit area 1 $m^2$ of a target object for the operation of spraying, coating, impregnation, spreading and the like.

When compound (I) is added to various resins and processed into molded objects such as fiber, film, sheet, plate and the like, moreover, the content of compound (I) in the molded object is preferably in the range of about 1-60 wt%, more preferably in the range of about 10-50 wt%.

In addition, the agent of the present invention can be formed into microcapsules. As the microcapsule, microcapsules prepared by surface polymerization, *in situ* polymerization, submerged curing coating, core solvation, physical and mechanical production method or a combination of these known methods are used. As the wall materials of microcapsules, for example, polyester, polyamide, polyurethane, polyurea, epoxy resin, polystyrene resin, ethylene-vinyl acetate copolymer, polylactic acid resin, acrylic resin, cellulose resin, sodium alginate, acacia, polyvinyl alcohol, gelatin, albumin and the like can be mentioned, with preference given to polylactic acid resin.

While the average particle size of the microcapsule is not particularly limited, but it is preferably in the range of 10 μm-1 mm, more preferably in the range of 20 μm-500 μm. The reason therefor is that, when the particles of microcapsules are too fine, compound (I) inside is released in a short time, oxidized, and the effective period of microcapsules becomes short. On the other hand, when the particles of microcapsules are too coarse, kneading into molded objects and the like becomes difficult and the kinds of objects capable of containing the particles are limited. For example, when microcapsules are adhered to a fiber product using a binder, the microcapsules are regarded clearly as a foreign substance and artificially eliminated, or intentionally crushed to stain the fiber products.

The amount of the microcapsules used to achieve the aforementioned Acarina repellence concentration is preferably not less than 3 g, more preferably not less than 5 g, per 1 $m^2$ of the space where repellence is intended, such as inside a room and the like. The release of compound (I) from the microcapsules is limited to a very low level, and even if a large amount is used, no problem occurs in terms of living environment. In consideration of economical aspect, and those who are highly sensitive to smell and do not like the smell of compound (I), however, it is preferably not more than 100 g, more preferably not more than 50 g, per 1 $m^2$.

By kneading the agent of the present invention with the aforementioned thermoplastic resins and then molding, a tape, a film, a sheet, a fiber, or other molded objects, having Acarina controllability, can be obtained. By processing these molded objects, closet spread materials, placement materials, clothing spreads, furniture back placement materials, under tatami mat spreads, floor sheets, carpet sheets, automobile interior materials, bed mats, mattresses, animal Acarina control bands (collars), pet animal clothings, pet animal spread and the like with Acarina controllability can be obtained. In addition, by attaching the agent of the present invention to a fiber product using a binder, a broad range of fiber products can have Acarina controllability, which may then be processed into Acarina controllable fiber products such as bedding, coverlet for kotatsu and the like. The agent of the present invention can be added to a paint, a paste agent and a spraying agent, which can be used as a paint or an adhesive for building materials, or sprayed on kennels and furnishings for pets and animals, or sprayed onto the body of an animal, whereby Acarina attached to kennels and animal bodies can be forced out.

The "Acarina" in the present invention means terrestrial animals belonging to the phylum Arthropoda, the class Arachnida, the order Acarina, and includes, for example,

Acarina belonging to the family Acaridae, such as Tyrophagus putrescentiae, Caloglyphus berlesei and the like;
Acarina belonging to the family Epidermoptidae, such as Dermatophagoides farinae, Dermatophagoides pteronyssinus and the like;
Acarina belonging to the family Cheyletidae, such as Chelacaropsis moorei, Cheyletus malaccensis and the like;
Acarina belonging to the family Glycyphagidae, such as Glycyphagus domesticus and the like;
Acarina belonging to the family Tarsonemidae, such as Tarsonemus granarius and the like;
Acarina belonging to the family Raphignathidae, such as Raphignathus domesticus and the like;
Acarina belonging to the family Macronyssidae, such as Ornithonyssus bacoti and the like;
Acarina belonging to the family Sarcoptidae, such as Sarcoptes scabiei and the like;
Acarina belonging to the family Trombiculidae, such as Leptotrombidium pallidum, Leptotrombidium scutellare and the like;
Acarina belonging to the family Tetranychidae, such as Tetranychus ludeni, Tetranychus urticae, Eotelranychus smithi and the like; .
Acarina belonging to the family Tenuipalpidae, such as Brevipalpus lewisi and the like;
Acarina belonging to the family Eriophyidae, such as Calepitrimerus vitis, Colomerus vitis and the like;
Acarina belonging to the family Carpoglyphidae, such as Carpoglyphus lactis and the like;

and the like.

## Examples

The present invention is explained in detail by referring to the following Examples, which are not to be construed as limitative.

Reference Example 1: measurement of farnesylacetone concentration in the air

Farnesylacetone (1 mL) was placed in a 50 mL sample bottle, and a large magnetic stirring bar capable of rotating the air as well was placed therein. The bottle was placed neck-deep in an oil bath at 130°C with rotation, and heated for 1 hr to saturate the inside of the sample bottle with farnesylacetone vapor. Thereafter, the gas in the sample bottle was taken by 5 mL with a gas tight syringe, and using gas chromatography with an FID detector, the concentration of farnesylacetone was measured by the absolute calibration method. As a result, 20,000 μg/L of farnesylacetone was found to be contained in this 5 mL gas. This sampled gas somewhat contained a white mist, had a strong odor, caused cough when inhaled in a large amount, and provoked uncomfortable feeling in human.

Farnesylacetone (1 mL) was placed in a 50 mL sample bottle, and a large magnetic stirring bar capable of rotating the air as well was placed therein. The bottle was placed neck-deep in a water bath at 60°C with rotation, and heated for 1 hr to fill the inside of the sample bottle with farnesylacetone vapor. Thereafter, the gas in the sample bottle was taken by 5 mL with a gas tight syringe, and using gas chromatography with an FID detector, the concentration of farnesylacetone was measured by an absolute calibration method. As a result, 20 μg/L of farnesylacetone was found to be contained in this 5 mL gas. Almost simultaneously, the gas (5 mL) in the sample bottle was taken again, a propeller was set in a 10 L beaker, the gas was added into the sealed beaker, the air in the beaker was stirred with the propeller for 10 min to dilute the gas 2,000-fold, whereby gas containing 0.01 μg/L farnesylacetone was obtained. The diluted gas (200 mL) was sampled with a syringe, a propeller was set in a 2 L flask, the gas was added into the sealed flask, the air in the beaker was stirred with the propeller for 10 min to further dilute the gas 10-fold, whereby gas containing 0.001 μg/L farnesylacetone was obtained. This sampled gas scarcely had an odor detected by human.

Example 1

The "glass tube method" known as one of the repellence tests for Acarina repellent-processed fibers was modified and used for a repellence test.

Fig. 1 shows a sectional view of the apparatus for the test. As shown in Fig. 1, a 20 mm diameter glass tube was bent in an L shape for use, 0.5 g of absorbent cotton was packed in part B of Fig. 1 in a 25 mm thickness, and fresh powder feed (0.1 g) for Acarina attraction, impregnated with about 20 wt% water, was placed in part C. In the L-shaped glass tube in the test section was fixed filter paper with a two-sided tape inside the glass tube at part D, a test sample (filter paper that absorbed farnesylacetone (0.1 g)) was placed, and the glass tube opening on the D side was sealed with an airtight PARAFILM. Then, a medium containing 10,000 live Acarina (Dermatophagoides pteronyssinus) were placed in part A of the L-shaped glass tube, and the glass end on the A side was sealed with a high density fabric capable of preventing passage of Acarina while maintaining air permeability. This test apparatus was stood still in a container maintained at 37±1°C, 75±5% Rh for 48 hr. After 48 hr from the start of the test, the needle of a 5 mL gas tight syringe was pierced through the film that sealed the D side of the L-shaped test glass tube, and the inside gas (2 ml) was sampled. The farnesylacetone concentration of the gas in part D was measured by gas chromatography. The concentration was assumed to be 5 μg/L.

Subsequently, the feed for attraction in part C was taken out, and the number of Acarina that invaded into the feed for attraction was counted by the following method. That is, the feed for attraction that was taken out was placed in a 50 mL Erlenmeyer flask, and two drops of a neutral detergent for dishes diluted to 0.5% were added dropwise, saturated brine was poured thereinto up to the mouth of the flask, and the flask was stood still for 10 min. The number of Acarina floating in the upper layer was counted. For a control section, a similar test was performed simultaneously wherein no test sample was placed in part D of the L-shaped tube. The repellence rate of the test sample was determined by the following formula and found to be 98%.

Repellence rate (%)=(1- number of Acarina that invaded the feed

for attraction in the test section/number of

Acarina that invaded the feed for attraction in

the control section)×100

Example 2

The invasion prevention method was modified and a repellence test was performed.

Fig. 2 shows an apparatus for the test, wherein (A) is a top view and (B) is a sectional view thereof.

As shown in Fig. 2, a glass plate (length 13 cm, width 6 cm, thickness 1.3 mm) was used as a base (1), 2 sheets (2, 2') of spacers made of a glass plate (length 13 cm, width 5 mm, thickness 1.3 mm) were adhered to the both long edges of the base 1 and 2 sheets (3, 3') of spacers made of a glass plate (length 5 cm, width 5 mm, thickness 1.3 mm) were adhered to the both short edges of the base, both with an instant adhesive to give a test box (shallow box of length 12 cm, width 5 cm, depth 1.3 mm). As a lid to cover this box (4, 4'), two glass plates (length 5.5 cm, width 6 cm, thickness 1.3 mm) were prepared.

An ethanol solution of farnesylacetone (1%, 100 mg) was coated on the surface of one (test section side) of the two lids to cover the test box, and ethanol was air dried for 10 min. Then, a sample for Acarina attraction (50 mg) each was placed on both ends of the test box in the longitudinal direction, and the above-mentioned farnesylacetone-coated lid (4') alone was placed, such that the surface coated with farnesylacetone faced the inside of the box. The box was placed in an incubator at 37°C for 60 min until the farnesylacetone vapor filled the test section side of the test box. The other lid was placed thereon, such that the center of the test box had a 2 cm gap, through which 50,000 Dermatophagoides farinae were released, and the test box was placed in an incubator maintained at 25°C for 1 day. Thereafter, the test container was taken out, the number of Acarina that invaded into the feeds in the test section side and the control section side (50 and 1100, respectively, the rest of the Acarina fled) was counted. The repellence rate was determined by the following formula and found to be 95%. The concentration of farnesylacetone filled in the air at 37°C was measured in the same manner as in Reference Example 1 and assumed to be 5 μg/L.

Repellence rate (%)=(1- number of Acarina that invaded the test

section/number of Acarina that invaded the control section) × 100⁻

Under these test conditions, farnesylacetone was not coated on the floor of the test box, which means that Acarina avoided the farnesylacetone vapor present in the space of the passage at a sufficient height where the body of Acarina could avoid physical contact.

Example 3

A 2L flask containing the gas containing 0.001 μg/L farnesylacetone prepared in the same manner as in Reference Example 1 was equipped with a Teflon@ tube (inner diameter 2 mm) for discharging the gas containing farnesylacetone and a Teflon® tube for charging water into the container using a metering pump, whereby an apparatus to send out (supply) the gas containing farnesylacetone at 1 mL/min by introducing water into the flask at 1 mL/min was manufactured. The test apparatus made of the glass plates used in Example 2 was modified by setting an injection needle for charging the gas containing farnesylacetone at the deepest part of the test section side and connecting the injection needle to a Teflon® tube from the apparatus for supplying the above-mentioned gas containing farnesylacetone. In addition, an injection needle for charging the air free of farnesylacetone was set at the deepest part of the control section side and fresh air was introduced at 1 mL/min.

Then the test apparatus was placed in a room with constant temperature and humidity at 37±1°C, 75±5% Rh, and the apparatus was operated for 3 hr for filling the test section with the above-mentioned concentration of farnesylacetone, after which an Acarina medium containing 10000 live Acarina were inserted from the gap of the lid and left standing for 4 hr. Then, the number of Acarina that invaded into the feed for attraction in each part C of the test section side and the control section side was counted. That is, the feed for attraction was taken out and placed in a 50 mL Erlenmeyer flask, and two drops of a neutral detergent for dishes diluted to 0.5% were added dropwise, saturated brine was poured thereinto up to the mouth of the flask, and the flask was stood still for 10 min. The number of Acarina floating in the upper layer was counted. The repellence rate was determined by the following formula and found to be 80%.

Repellence rate (%)=(1- number of Acarina that invaded the test section/number of Acarina that invaded the control section) × 100

The gas containing 0.001 μg/L of farnesylacetone produced almost no smell for human, but had a repellence effect on Acarina.

Experimental Example 1

The repellence rates of the isomer of farnesylacetone and phytone under 1.0 g/m² conditions for a kind of Dermatophagoides pteronyssinus were determined by the repellence test method (invasion preventive method: "Processing Technique" vol. 33, No. 2, pp. 153-155 (1998) "titled: Acarina repellent-processed product repellence test basic manual" (*Apareru Seihin-tou Hinshitsu Seinou Taisaku Kyougikai*). The results are shown in Table 1 below.

Table 1

| sample | Days of observation | | |
|---|---|---|---|
| | 1 day later (Acarina) | 2 days later (Acarina) | 3 days later (Acarina) |
| untreated (control group) | 65 | 132 | 140 |
| cis-cis rich farnesylacetone⁺⁺ | 5 (92.3⁺) | 15 (88.6⁺) | 29 (79.3⁺) |
| trans-trans farnesylacetone | 8 (87.7⁺) | 13 (90.2⁺) | 24 (82.9⁺) |
| phytone | 7 (89.2⁺) | 12 (90.9⁺) | 23 (83.6⁺) |

⁺: {1-(number of Acarina in the treatment section/number of Acarina in the control section)} × 100 (%)

⁺⁺: farnesylacetone wherein (5-cis, 9-cis form): (mixture of 5-cis, 9-trans form and 5-trans, 9-cis form) is 6:4

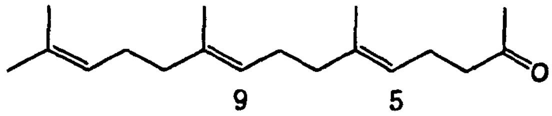

9 5

Example 4

Commercially available candle was melted and farnesylacetone (10 g) was uniformly dissolved in the obtained wax (90 g) (reservoir means). The wax containing farnesylacetone was adhered around a lampwick, whereby a candle for a votive candle of Buddhist altar was made experimentally. The dust obtained by sweeping a room, in which a votive candle (heating means) was lit every day, with an electric vacuum cleaner was observed with a microscope. As a result, Acarina were not found in the dust obtained from the room in which a votive candle was lit, but the dust obtained by sweeping other rooms contained 10 Acarina in 0.5 g thereof. The gaseous farnesylacetone concentration was 60 μg/L in the room after the votive candle went out.

Example 5

Farnesylacetone (10 g) was mixed with a soft acrylic resin powder (100 g, product name Parapet SA-N, manufactured by KURARAY CO. LTD.) and blended at room temperature for 15 min. The mixture was melt kneaded in a twin roll kneader at 125°C for 1 min and press molded at 135°C, 50 $kg/cm^2$ for 1 min to give a 1 mm thick soft rubber sheet (reservoir means and vaporization area expanding means). This sheet was placed under a part of a carpet, and after living normally for 2 weeks, the dust obtained from the part above the sheet containing farnesylacetone with an electric vacuum cleaner and the dust obtained from a part far from the sheet containing farnesylacetone were compared by microscopic observation. As a result, Acarina were not found in the dust obtained from the part above the sheet containing farnesylacetone, but the dust obtained from the part far from the sheet contained 7 Acarina in 0.5 g thereof. The air in the carpet where the soft acrylic sheet was placed was driven out and the farnesylacetone concentration was measured and found to be 1 μg/L.

Example 6

A dispersion phase obtained by dissolving farnesylacetone (2 g) and polyacetate (10 g, manufactured by Cargill Dow LLC, number average molecular weight 87,000, weight average molecular weight 163,300, D/L ratio 8/92) in dichloromethane (100 mL) and a continuous phase consisting of 4% aqueous polyvinyl alcohol solution (1400 mL) and a surfactant (Q12S) (10.4 g) were mixed, stirred at a rate of 100 rpm with a propeller stirrer at 30°C for 30 min. The level of reduced pressure in the reaction vessel was raised stepwisely, and the mixture was stirred for 6 hr under reduced pressure created by an aspirator to evaporate dichloromethane. The obtained suspension was passed through a glass filter, the resultant was washed with water several times, and lyophilized for one day to give a microcapsule including farnesylacetone. The obtained microcapsule was an about spherical particle having an average particle size of 0.4 mm and showed dry flowability similar to the grain of sand.

Example 7

The Dermatophagoides pteronyssinus repellence rate of the microcapsule obtained in Example 6 was determined by the repellence test method (invasion preventive method: see Experimental Example 1) and found to be 99%. According to this method, a repellence rate of 60% or above is considered to be effective. In addition, the microcapsule obtained in Example 6 was placed in a container without a lid and left standing at room temperature for 2 months or 6 months and a similar test was performed. As a result, the repellence rate was 99% 2 months later and 81% 6 months later, demonstrating retention of the effect for a very long period.

Example 8

The microcapsule (30 g) obtained in Example 6 was mixed with a soft acrylic resin powder (100 g, product name Parapet SA-N, manufactured by KURARAY CO. LTD.) and melt kneaded in a twin roll kneader at 155°C for 1 min, press molded at 160°C, 50 $kg/cm^2$ for 1 min and cooled to give a sheet. The microcapsules were uniformly dispersed in the sheet but abnormality such as smoke and the like was not found during the molding process.

Example 9

To a slurry (600 g) having a solid content of 17%, which was obtained by diluting monodispersed silica particles having an average particles size of 0.045 μm (manufactured by Nissan Chemical Industries Ltd., Snowtex OL) with water was added water (20 g) dissolving polyvinyl alcohol (2 g, PVA 117 manufactured by KURARAY CO. LTD.) as a binder and the mixture was thoroughly mixed. The obtained slurry was spray-dried with a spray dryer (L-8, manufactured by Ohkawarakakouki Co., Ltd.) to give agglomerated particles having a particles size of about 20 μm. The particles were sintered at 450°C for 1 hr to remove the binder, whereby porous agglomerated particles (95 g) consisting of silica were obtained. A solution of phytone (20 g) and ethanol (80 mL) was placed in a pear-shaped flask, and the above-mentioned porous agglomerate (80 g) was added. The pear-shaped flask was set on a rotary evaporator and rotated for 5 min at normal pressure. While gradually raising the level of reduced pressure and temperature, ethanol was removed by evaporation to give sand-like silica particles retaining phytone.

Example 10

Polyvinyl acetate (5 g) and farnesylacetone (10 g) were dissolved in methanol (300 mL) and porous silica powder (100 g) was added to the solution. Methanol was removed with a rotary evaporator and, after outflow of methanol stopped, the rotary evaporator was operated at 40°C, 20 mmHg for 1 hr, whereby an aggregated silica solid coated with polyvinyl acetate, which contains farnesylacetone inside and on the surface thereof was prepared. This agglomerate was collected and pulverized, and a small amount of talc was adhered to the surface thereof to give a silica particle retaining farnesylacetone, which had a particle size of not more than 1 mm.

Experimental Example 2

The Dermatophagoides pteronyssinus repellence rates of the silica particles prepared in Examples 9 and 10 were determined by the repellence test method (invasion preventive method: see Experimental Example 1). The results are shown in Table 2.

Table 2

| sample | Number of days observed | | |
|---|---|---|---|
| | 1 day later | 2 days later | 4 days later |
| silica particles of Example 9 | 78% | 83% | 73% |
| silica particles of Example 10 | 100% | 100% | 100% |

Example 11

An apparatus comprising a syrindrical reservoir part (reservoir means) having an inner diameter 8 cm, a height 5 cm and containing farnesylacetone and a glass cloth (vaporization area expanding means) set on a wall to enlarge the evaporation area of farnesylacetone by allowing farnesylacetone contained in the reservoir part to ooze out, wherein the bottom and wall were heated to 90°C by a heating wire (heating means) and a bimetal (temperature control means), and the air was flown from the upper part of the container toward the bottom at 5 L/min using a small fan (air blowing means), was set in a closed 3-tatami-mat room and operated.

**Industrial Applicability**

According to the method of the present invention, by maintaining the concentration of compound (I) within a particular concentration range in a space where Acarina repellence is intended, Acarina can be effectively controlled. Moreover, the agent of the present invention can provide an Acarina controlling effect on various articles.

This application is based on patent application Nos. 31409/2002 and 34625/2002 filed in Japan, the contents of which are all hereby incorporated by reference.

**Claims**

**1.** A method of controlling Acarina, which comprises maintaining a gaseous compound having the formula (I)

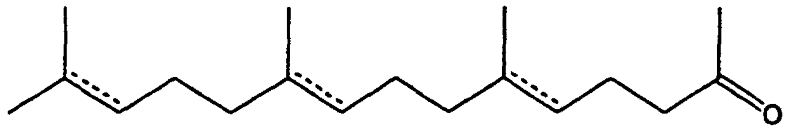

(I)

wherein -------- is a single bond or a double bond, at a concentration of 0.001-20,000 μg/L in a space where Acarina repellence is intended.

**2.** The method of claim 1, wherein the concentration is achieved by vaporizing a compound having the formula (I) by a vaporization enhancing means.

**3.** The method of claim 1 or 2, wherein the concentration is achieved by vaporizing a compound having the formula (I) by a vaporization area expanding means.

**4.** The method of claim 2, wherein the vaporization enhancing means is a heating means.

**5.** The method of claim 2, wherein the vaporization enhancing means is an air blowing means.

**6.** An apparatus for controlling Acarina, which comprises a reservoir means for an agent containing a compound having the formula (I)

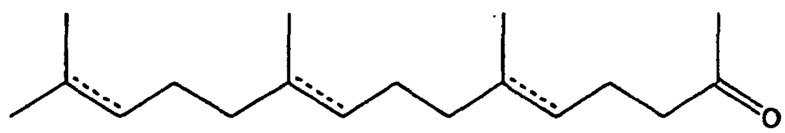

(I)

wherein -------- is a single bond or a double bond, and a means for enhancing vaporization of the compound having the formula (I).

**7.** The apparatus of claim 6, further comprising a vaporization area expanding means for the compound having the formula (I).

**8.** The apparatus of claim 6 or 7, wherein the vaporization enhancing means is a heating means.

**9.** The apparatus of claim 6 or 7, wherein the vaporization enhancing means is an air blowing means.

**10.** An Acarina control agent comprising phytone as an active ingredient.

FIG. 1

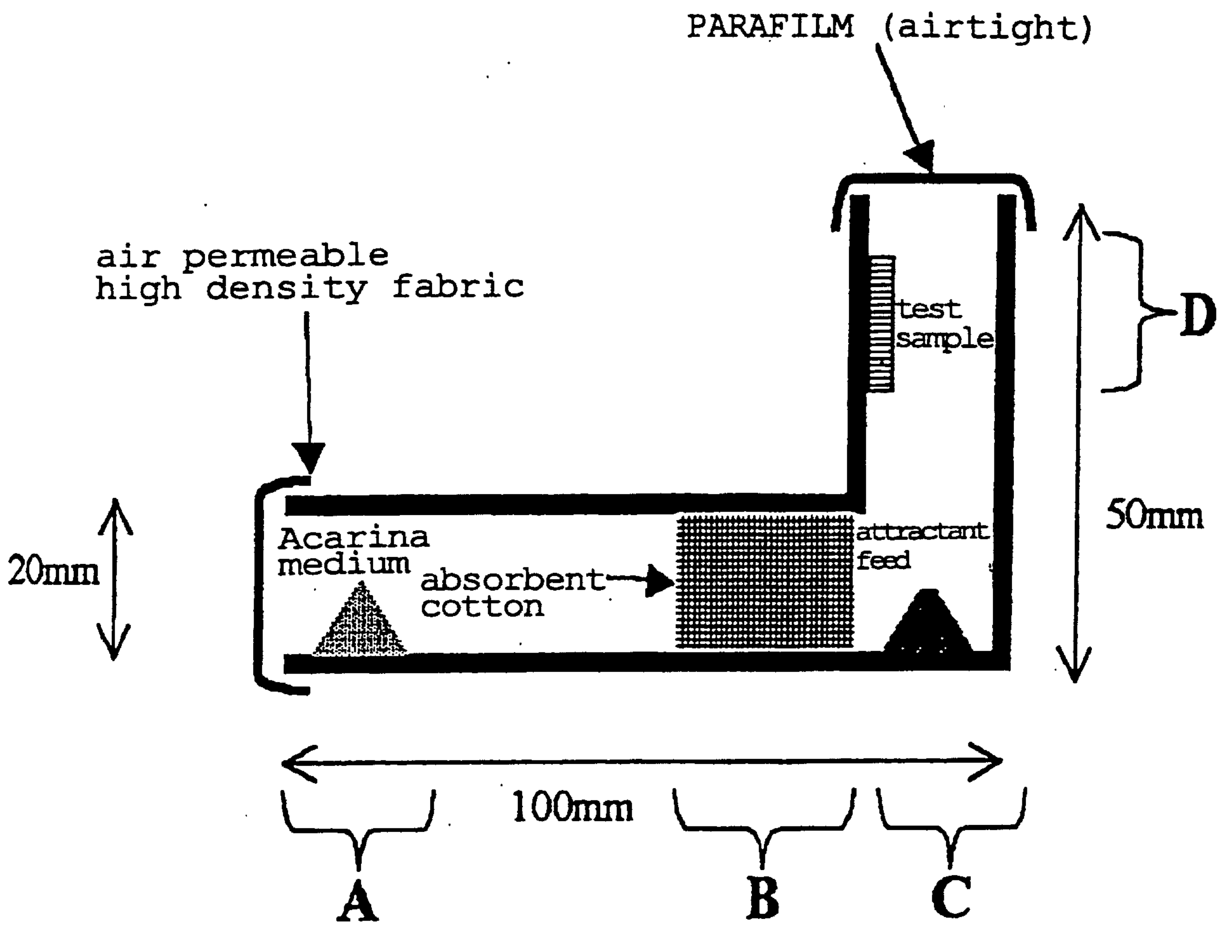
PARAFILM (airtight)
air permeable
high density fabric
test
sample
D
Acarina
medium
absorbent
cotton
attractant
feed
20mm
50mm
100mm
A
B
C

FIG. 2

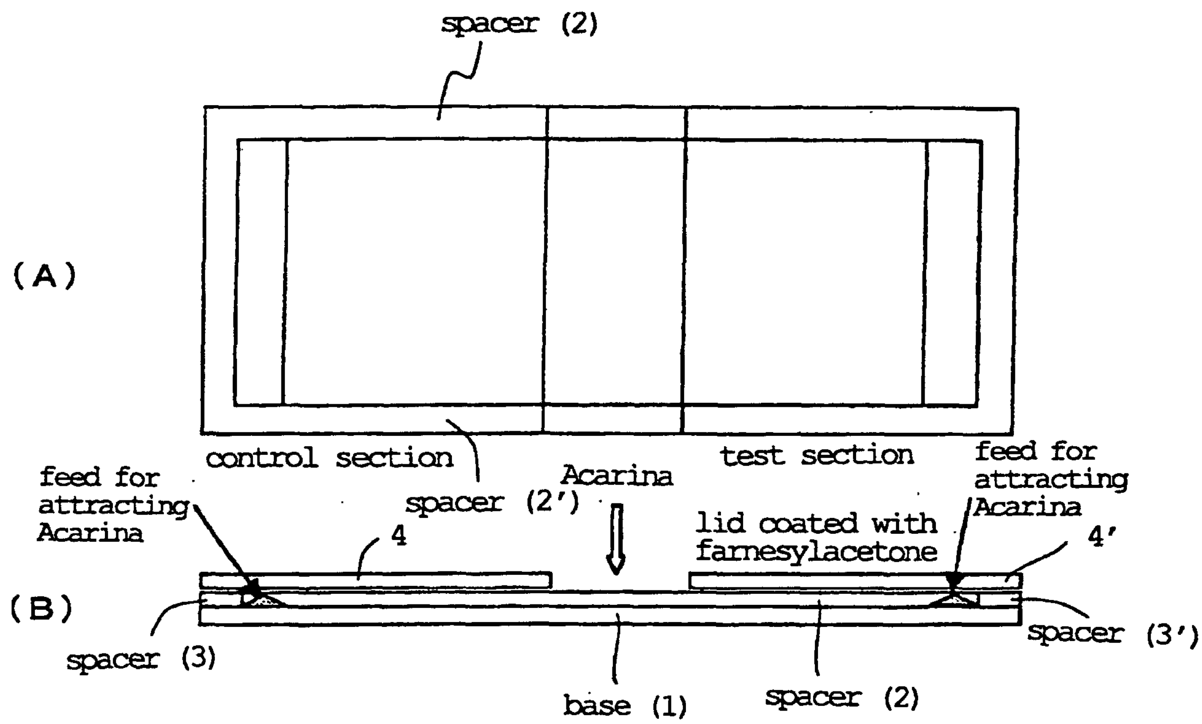
spacer (2)
(A)
control section
test section
feed for attracting Acarina
Acarina
spacer (2')
lid coated with farnesylacetone
feed for attracting Acarina
4
4'
(B)
spacer (3)
spacer (3')
base (1)
spacer (2)

## INTERNATIONAL SEARCH REPORT

International application No.
PCT/JP03/01303

A. CLASSIFICATION OF SUBJECT MATTER
Int.Cl[7] A01N25/18, 35/00

According to International Patent Classification (IPC) or to both national classification and IPC

B. FIELDS SEARCHED

Minimum documentation searched (classification system followed by classification symbols)
Int.Cl[7] A01N25/18, 35/00

Documentation searched other than minimum documentation to the extent that such documents are included in the fields searched

Electronic data base consulted during the international search (name of data base and, where practicable, search terms used)
CA(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 10-316507 A (Kuraray Co., Ltd.),<br>02 December, 1998 (02.12.98),<br>Full text<br>(Family: none) | 1-9 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 April, 2003 (22.04.03) | 20 May, 2003 (20.05.03) |

| Name and mailing address of the ISA/ | Authorized officer |
|---|---|
| Japanese Patent Office | |
| Facsimile No. | Telephone No. |